(19) Europäisches Patentamt / European Patent Office / Office européen des brevets

(11) **EP 2 026 586 A1**

(12) **EUROPEAN PATENT APPLICATION**
published in accordance with Art. 153(4) EPC

(43) Date of publication:
**18.02.2009 Bulletin 2009/08**

(51) Int Cl.:
***H04N 9/07*** *(2006.01)*

(21) Application number: **07737838.8**

(22) Date of filing: **06.03.2007**

(86) International application number:
**PCT/JP2007/054288**

(87) International publication number:
**WO 2007/135798 (29.11.2007 Gazette 2007/48)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.05.2006 JP 2006143668**

(71) Applicant: **Panasonic Corporation**
**Kadoma-shi**
**Osaka 571-8501 (JP)**

(72) Inventors:
• **SUMIYA, Kazunori**
  **Chuo-ku, Osaka-shi, Osaka, 540-6207 (JP)**
• **YATA, Manabu**
  **Chuo-ku, Osaka-shi, Osaka, 540-6207 (JP)**

• **HIZUME, Taro**
  **Chuo-ku, Osaka-shi, Osaka, 540-6207 (JP)**
• **SUBE, Makoto**
  **Chuo-ku, Osaka-shi, Osaka, 540-6207 (JP)**
• **SERIZAWA, Masayuki**
  **Chuo-ku, Osaka-shi, Osaka, 540-6207 (JP)**
• **NAKAJIMA, Takeshi**
  **Chuo-ku, Osaka-shi, Osaka, 540-6207 (JP)**
• **IWATA, Hideki**
  **Chuo-ku, Osaka-shi, Osaka, 540-6207 (JP)**

(74) Representative: **Pautex Schneider, Nicole Véronique et al**
**Novagraaf International SA**
**25, avenue du Pailly**
**1220 Les Avanchets - Geneva (CH)**

(54) **IMAGE PROCESSING DEVICE**

(57)    An image signal inputted from an image signal input unit (10) is passed through LPFs (14 and 16) having different frequency response characteristics to remove a color signal component. A feature value calculator (20) calculates an edge value, saturation, and hue from pixels surrounding a target pixel, and a weighting coefficient calculator (22) determines a weighting coefficient k from the feature values calculated by the feature value calculator (20) and from the amounts of changes therein. According to weighting coefficient k calculated by the weighting coefficient calculator (22), a weighted adder (24) performs weighted addition in such a way that it uses a greater amount of a signal of the LPF (14), which passes high-frequency components, for an achromatic color area or even for a chromatic color area if the area has little saturation and change in hue; and that it uses a greater amount of a signal of the LPF (16), which causes little aliasing, for a chromatic color area with some saturation and change in hue. A horizontal contour correction unit (26) receives an output signal of the weighted adder (24) and generates a horizontal contour correction signal. Consequently, a high-quality image having high resolution and little aliasing can be obtained with the scale of the circuit being limited.

FIG.1

**Description**

RELATED APPLICATIONS

This application claims the benefit of Japanese Patent Application No. 2006-143668 filed on May 24, 2006 in Japan, the contents of which are incorporated herein by reference.

TECHNICAL FIELD

The present invention relates to image signal processing in a complementary-color single-chip camera, and particularly to an image processing device that improves horizontal resolution and reduces aliasing on a color border.

BACKGROUND ART

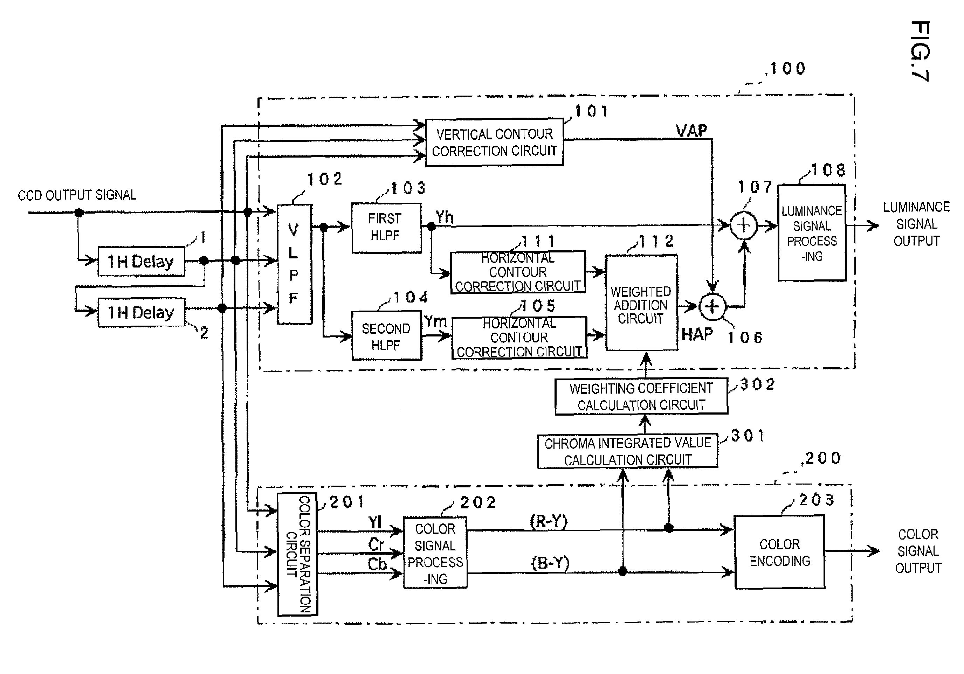

Figure 7 is a configuration of a signal processing circuit of a complementary-color single-chip camera shown in Japanese Patent No. 3540758. Horizontal LPFs 103 and 104 having different frequency response characteristics comprise: a first HLPF 103 of a multitap configuration; and a second HLPF 104 of a few-tap configuration. The first HLPF 103 has the property of passing higher-frequency components than the second HLPF 104.

An output of the first HLPF 103 is sent to a horizontal contour correction circuit 111, which generates a horizontal contour signal (horizontal aperture signal) HAP. Likewise, an output of the second HLPF 104 is sent to a horizontal contour correction circuit 105, which generates a horizontal contour signal (horizontal aperture signal) HAP. The first horizontal contour signal generated by the first horizontal contour correction circuit 111 and the second horizontal contour signal generated by the second horizontal contour correction circuit 105 are sent to a weighted addition circuit 112.

Since the first HLPF 103 has the property of passing higher-frequency components than the second HLPF 104, the first horizontal contour correction circuit 111 can generate a finer (higher-resolution) horizontal contour signal than the second horizontal contour correction circuit 105.

In this regard, however, since the first HLPF 103 is formed of an LPF of a multitap configuration, the use of a horizontal contour signal generated by the first horizontal contour correction circuit 111 might cause ringing in a border area between colors in an image. The image processing device shown in Figure 7 is provided with: a chroma integrated value calculation circuit 301 for calculating a chroma integrated value based on a color difference signal outputted from a color signal processing circuit 202; and a weighting coefficient calculation circuit 302 for calculating a weighting coefficient for each pixel based on a chroma integrated value calculated for each chroma integration area by the chroma integrated value calculation circuit 301.

Based on the weighting coefficient calculated for each pixel by the weighting coefficient calculation circuit 302, the weighted addition circuit 112 calculates a weighted sum of the first and second horizontal contour signals. A high-resolution luminance signal can be obtained in both an achromatic color area and a chromatic color area by: using the first horizontal contour signal generated based on an output of the first HLPF 103, which passes high-frequency components, for an achromatic color area that contains high-frequency components; and using the second horizontal contour signal, which does not cause ringing, for a chromatic color area that does not contain high-frequency components.

DISCLOSURE OF THE INVENTION

Problems to be solved by the invention

However, since the conventional image processing device requires a plurality of horizontal contour correction circuits, the scale of the circuit would expand. In addition, chroma adjusted with an edge value is used for the weighting coefficient control, and therefore an output signal of the LPF having a low frequency response characteristic is used for a chromatic color area, causing a problem that the resolution decreases in a chromatic color area as compared to an achromatic color area.

A purpose of the invention made in view of the above-mentioned background is to provide an image processing device capable of reducing the scale of the circuit and providing a high-resolution image even for a chromatic color area.

Means for solving the problems

An image processing device of the invention comprises: a plurality of horizontal low-pass filters for performing horizontal low-pass filtering on an inputted image signal, the plurality of horizontal low-pass filters having different frequency response characteristics; a weighted adder for calculating a weighted sum of output signals from the plurality of horizontal low-pass filters; and a horizontal contour correction unit for performing horizontal contour correction based on a weighted sum signal calculated by the weighted adder.

There are other aspects of the invention as described below. This disclosure of the invention therefore intends to provide part of the invention and does not intend to limit the scope of the invention described and claimed herein.

BRIEF DESCRIPTION OF THE DRAWINGS

Figure 1 is a block diagram of an image processing device of a first embodiment;
Figure 2 is a graph of frequency response characteristics of LPFs of the first embodiment;
Figure 3 is a conceptual drawing of pixels and image signals;
Figure 4 is a block diagram of an image processing device of a second embodiment;
Figure 5A is a conceptual drawing of aliasing that occurs on a border between colors whose phases are opposite to each other for every line;
Figure 5B is a conceptual drawing of aliasing that occurs on a border between colors whose phases are the same phase for every line;
Figure 6 is a block diagram of an image processing device of a third embodiment; and
Figure 7 shows a configuration of a conventional image processing device.

BEST MODE OF EMBODYING THE INVENTION

The following is a detailed description of the invention. It will be understood that the embodiments described below are only examples of the invention, and the invention can be varied in various aspects. Therefore, the specific configurations and functions disclosed below do not limit the claims.

An image processing device of this embodiment comprises: a plurality of horizontal low-pass filters for performing horizontal low-pass filtering on an inputted image signal, the plurality of horizontal low-pass filters having different frequency response characteristics; a weighted adder for calculating a weighted sum of output signals from the plurality of horizontal low-pass filters; and a horizontal contour correction unit for performing horizontal contour correction based on a weighted sum signal calculated by the weighted adder.

In this configuration, since the horizontal contour correction process is performed after the weighted adder has calculated a weighted sum of output signals from the horizontal low-pass filters, it is not required to provide every one of the plurality of horizontal low-pass filters with a horizontal contour correction unit, and the scale of the circuit can be reduced.

The image processing device of the embodiment has: a feature value calculator for calculating hue from pixels surrounding a target pixel; and a weighting coefficient calculator for determining a weighting coefficient based on hue calculated by the feature value calculator, where the weighted adder calculates a weighted sum of the output signals using a weighting coefficient calculated by the weighting coefficient calculator.

In this configuration, by calculating a weighted sum using a weighting coefficient determined based on hue, whether priority is given to smooth image quality with little aliasing or to resolution can be chosen based on hue. For example, a process can be performed in which resolution is increased even for a chromatic area if the area has little change in hue.

The image processing device of the embodiment has: a feature value calculator for calculating saturation and hue from pixels surrounding a target pixel; and a weighting coefficient calculator for determining a weighting coefficient based on saturation, change in saturation, hue, and change in hue calculated by the feature value calculator, where the weighted adder calculates a weighted sum of the output signals using a weighting coefficient calculated by the weighting coefficient calculator.

In this configuration, by calculating a weighted sum using a weighting coefficient determined based on saturation and hue, whether priority is given to smooth image quality with little aliasing or to resolution can be chosen based on hue. For example, a process can be performed in which resolution is increased even for a chromatic area if the area has little change in hue.

The image processing device of the embodiment has: a plurality of horizontal low-pass filters to which an image signal and a delayed image signal are inputted, the plurality of horizontal low-pass filters having a same property; a vertical low-pass filter for performing vertical low-pass filtering on output signals from horizontal low-pass filters having a same frequency response characteristic; and a second weighted adder for calculating a weighted sum of an output signal of the vertical low-pass filter and an output signal of the horizontal low-pass filter, where the weighting coefficient calculator determines a second weighting coefficient to be used by the second weighted adder, based on hue calculated by the feature value calculator.

In this configuration, since a weighting coefficient for the second weighted adder is controlled according to hue, the degree of correction using the vertical low-pass filter can be controlled based on hue. On a color border, for example, aliasing that occurs on the color border can be reduced by using a greater amount of an output signal of the vertical LPF.

In the image processing device of the embodiment, the plurality of horizontal low-pass filters are separately placed on a plurality of lines; an image signal and a delayed image signal are inputted one by one to one of the plurality of lines according to a delay time thereof; and the second weighted adder calculates a weighted sum of an output signal of a central line of the plurality of lines and an output signal of the vertical low-pass filter.

In this configuration, when a weighted sum of output signals from low-pass filters having different frequency response characteristics is calculated, a time lag between the image signals whose weighted sum is to be calculated is eliminated, and an appropriate correction can be made.

The image processing device of the embodiment has: a border-area correction low-pass filter for correcting aliasing that occurs in a border area between colors, where when an image signal of a border area has been detected based on hue determined by the feature value calculator, the weighted adder calculates the weighted sum including an output signal from the border-area correction low-pass filter.

In this configuration, when an image signal of a color border area has been detected by a change in hue, aliasing that occurs on the border can be reduced by correcting using the border-area correction low-pass filter. The border-area correction low-pass filter is preferably a low-pass filter with a low frequency response characteristic so as to be able to correct aliasing on a color border. In other areas than a color border area, a high-resolution image can be obtained by not using the border-area correction low-pass filter.

Now, image processing devices of embodiments of the invention will be described in detail with reference to the drawings.

(First embodiment)

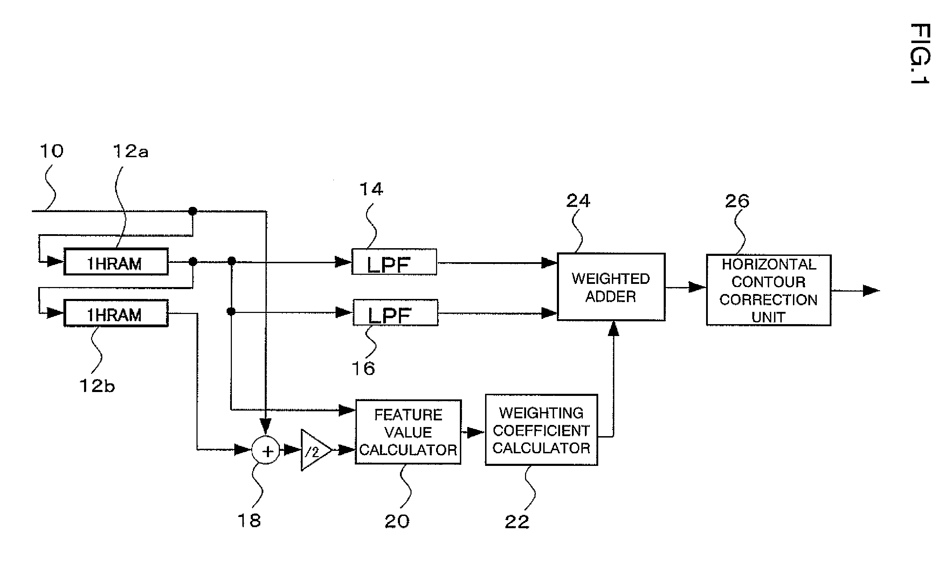

Figure 1 is a block diagram showing a configuration of an image processing device of a first embodiment of the invention. The image processing device comprises an image signal input unit 10, 1HRAMs 12a and 12b, LPFs 14 and 16, an adder 18, a feature value calculator 20, a weighting coefficient calculator 22, a weighted adder 24, and a horizontal contour correction unit 26.

In a field read signal that is inputted from the image signal input unit 10, a mixed signal of Cy (cyan) and Mg (magenta) and a mixed signal of Ye (yellow) and G (green) are alternately aligned on (n) line, and a mixed signal of Cy (cyan) and G (green) and a mixed signal of Ye (yellow) and Mg (magenta) are alternately aligned on (n + 1) line. As an image signal, an output signal of an imaging element to which CDS and an analog gain control are applied may be A/D converted and directly inputted; or image signals recorded in advance in a storage may be read one by one.

An image signal inputted from the image signal input unit 10 is delayed horizontal periods by the 1HRAMs 12a and 12b. This allows image information of a plurality of lines to be vertically processed at the same time. While in the embodiment the two 1HRAMs 12a and 12b are used to process three lines at the same time, the configuration is not limited thereto, and a lot more 1HRAMs may be added to calculate a feature value with higher accuracy.

The LPFs 14 and 16 are filters for removing color components from an image signal. The LPF 14 is formed with a larger number of taps than the LPF 16.

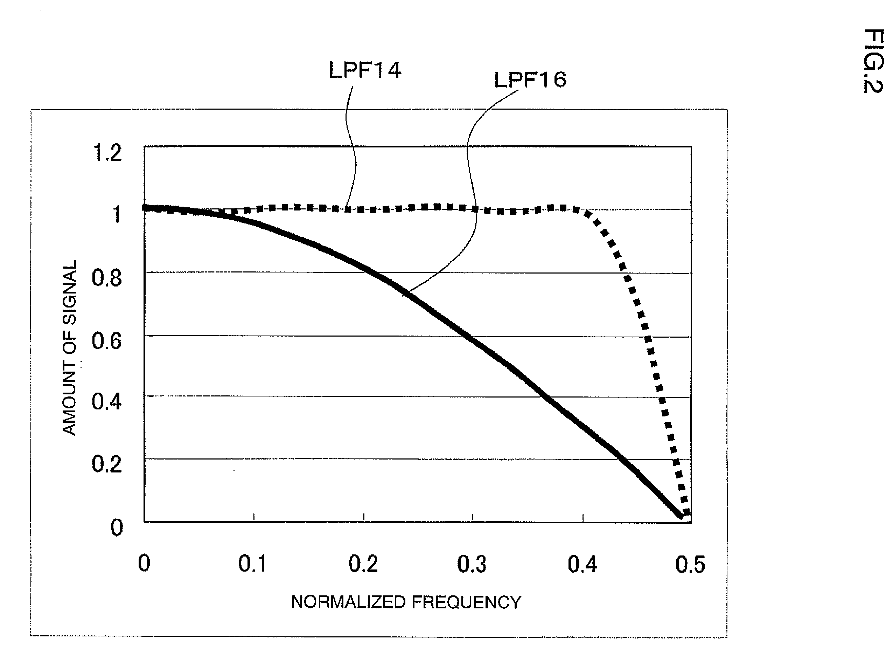

Figure 2 shows frequency response characteristics of the LPFs 14 and 16. As shown in Figure 2, the LPF 14 has a frequency response characteristic of passing higher-frequency components as compared to the frequency response characteristic of the LPF 16.

The adder 18 adds an input signal from the image signal input unit 10 and an output signal of the 1 HRAM 12b together, calculates the average, and inputs the average to the feature value calculator 20 along with a signal of 1 HRAM 12a (central line).

The feature value calculator 20 calculates an edge value, saturation, and hue from pixels surrounding a target pixel. The feature value calculator 20 calculates an edge value based on the amount of change in signals of the same color that are adjacent to each other with one pixel interval between them. The feature value calculator 20 determines saturation based on the absolute value of the difference between horizontally adjacent pixels. That is, saturation is calculated for each of a central, upper, and lower line signals, and the average is calculated. The averaging process is also performed horizontally, allowing the resulting value to be the saturation around a target pixel. The feature value calculator 20 determines hue based on a combination of change in horizontally adjacent signals of each of a central, upper, and lower line signals.

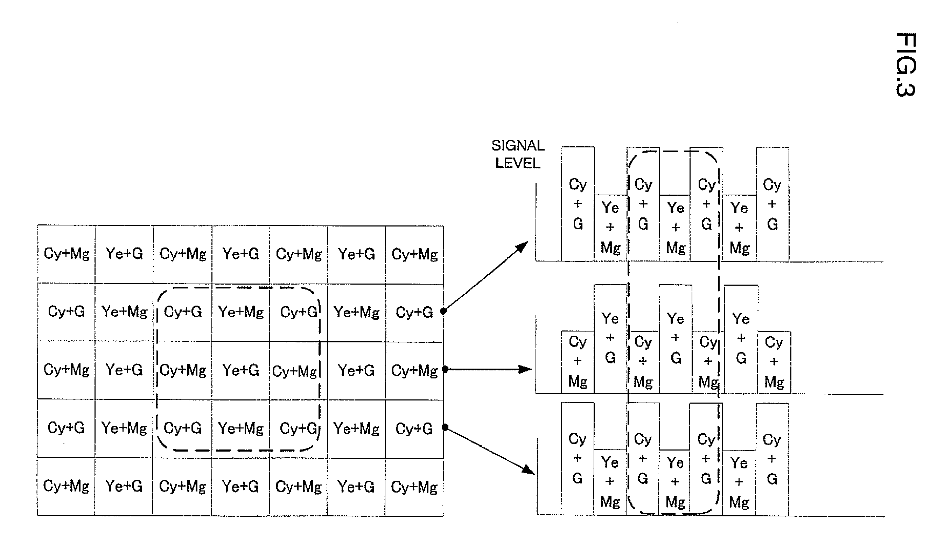

Figure 3 shows an example in which the feature value calculator 20 determines hue. As shown in Figure 3, if the signal levels of signals (Cy + Mg), (Ye + G), and (Cy + Mg) of a central line are "low," "high," and "low," and if the signal levels of signals (Cy + G), (Ye + Mg), and (Cy + G) of the lines above and below the central line are "high," "low," and "high," the feature value calculator 20 estimates that hue around the target pixel is close to green.

The hue calculation method is not limited to the adjacent difference scheme, but may be that hue is determined from a combination of pluses and minuses relative to an average value of surrounding signals for each of a central, upper, and lower line signals, or may be that hue is determined by synchronously detecting each of a central, upper, and lower line signals, assuming that signal variations by color components are 2-PSK.

The weighting coefficient calculator 22 determines a weighting coefficient k from an edge value, saturation, and hue calculated by the feature value calculator 20 and from the amounts of changes therein. The weighting coefficient calculator 22 first determines a coefficient $c_1$ that is proportional to saturation. That is, the weighting coefficient calculator 22 determines coefficient $c_1$ so that $c_1$ equals 0 for an achromatic color area, and that $c_1$ equals 1 for an area with high saturation.

The weighting coefficient calculator 22 then corrects coefficient $c_1$ with an edge value to determine a coefficient $c_2$. This is for limiting the influence of a change in luminance that will be incorrectly calculated as a false color even in an achromatic area if the area is an edge area, since color information is determined from the amount of change in signals among a plurality of pixels by using the adjacent signal difference or other method. The weighting coefficient calculator 22 determines coefficient $c_2$ by subtracting an edge value multiplied by a prescribed value from coefficient $c_1$.

The weighting coefficient calculator 22 then determines the amounts of changes in saturation and hue between pixels on the left and right of the target pixel. Since aliasing does not occur if there is no change in saturation or hue even in a chromatic color area, coefficient $c_2$ is decreased for an area with little change in saturation and hue and is set as weighting coefficient k which is to be determined. Since aliasing is more obvious on a color border between hues, such as green and magenta, red and blue, and yellow and cyan, whose phases of signal variations by color components are opposite to each other, coefficient $c_2$ is increased and set as weighting coefficient k which is to be determined.

As above, weighting coefficient k is calculated in a range from 0 to 1 so that weighting coefficient k is set to 0 for an achromatic color area and, conversely, weighting coefficient k is set to 1 for an area whose saturation is high and whose saturation and hue are changing.

The weighted adder 24 determines a weighted sum signal by the following equation (1) in which weighting coefficient k calculated by the weighting coefficient calculator 22, an output signal of the LPF 14, and an output signal of the LPF 16 are used.

$$\text{Weighted sum signal} = (1 - k)*\text{Output signal of LPF 14} + k*\text{Output signal of LPF 16} \quad (1)$$

In this way, by determining a weighted sum signal using weighting coefficient k that is determined according to a feature value, the usage ratio between the LPFs 14 and 16 can be changed according to a feature of an image. For example, a signal of the LPF 14, which passes high-frequency components, is used for an achromatic color area or even for a chromatic color area if the area has little saturation and change in hue; and a signal of the LPF 16, which causes little aliasing, is used for a chromatic color area with some saturation and change in hue.

The horizontal contour correction unit 26 receives an output signal of the weighted adder 24 and generates a horizontal contour correction signal. The process of the horizontal contour correction unit 26 is in principle a process of enhancing the amount of change in signal using an HPF, and the horizontal contour correction unit 26 performs a coring process for reducing the influence of noise, and the like. The above is a description of the image processing device of the embodiment.

In the image processing device of the embodiment, since horizontal contour correction is made after the weighted adder 24 has weighted output signals from the plurality of LPFs 14 and 16, no more than one horizontal contour correction unit 26 is required. Consequently, the scale of the circuit of the image processing device can be reduced.

In the image processing device of the embodiment, by determining weighting coefficient k according to a value determined by the feature value calculator 20, the weighting coefficient calculator 22 can change the usage ratio between the LPFs 14 and 16 according to a feature of an image. For example, a high-resolution image can be obtained for an achromatic color area and even for a chromatic color area if the area has little saturation and change in hue; and a high-quality image with little aliasing can be obtained for a chromatic color area with some saturation and change in hue.

(Second embodiment)

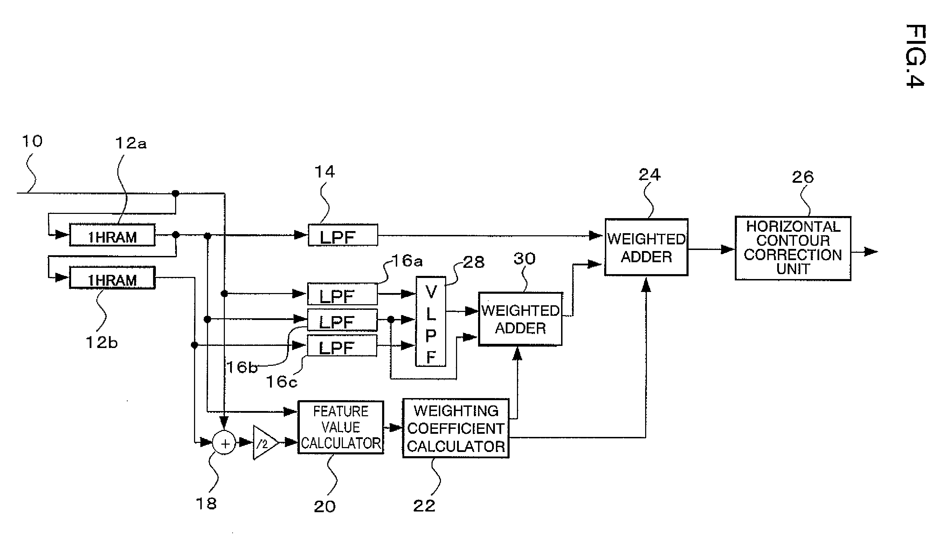

Figure 4 is a block diagram showing a configuration of an image processing device of a second embodiment. The configuration of the image processing device of the second embodiment is basically the same as that of the image processing device of the first embodiment, but is different in having a plurality of LPFs 16a to 16c having the same property. The image processing device of the second embodiment also has a vertical LPF (hereinafter referred to as the "VLPF") 28 and a weighted adder 30.

The plurality of LPFs 16a to 16c receives a signal from the image signal input unit 10 and output signals of the 1HRAMs 12a and 12b, and performs low-pass filtering separately on the signals of the plurality of lines. The LPFs 16a to 16c have $(1 + Z^{-1})/2$ or other few-tap configurations to reduce the extent of aliasing on a color border at the expense of frequency response characteristics. In this regard, however, even an LPF with $(1 + Z^{-1})/2$ does not eliminate aliasing on a color border.

The VLPF 28 performs vertical low-pass filtering on output signals of the LPFs 16a to 16c. In the second embodiment, the weighting coefficient calculator 22 calculates a weighting coefficient k2 to be used by the weighted adder 30, in addition to weighting coefficient k.

The weighted adder 30 calculates a weighted sum of a signal of the central line and an output signal of the VLPF 28 by the following equation (2) in which weighting coefficient k2 is used.

$$\text{Weighted sum signal} = (1 - k2)*\text{Output signal of VLPF} + k2*\text{Signal of central line} \quad (2)$$

In this regard, a relation between hue and weighting coefficient k2 will be described. On a border between colors, such as green and magenta, and red and blue, whose phases of signal variations by color components are opposite to each other for every line, the VLPF 28 can reduce aliasing by performing vertical LPF though it decreases vertical resolution in the color border area. Therefore, in this case, weighting coefficient k2 is set close to 0 so that a greater amount of an output signal of the VLPF 28 is used. On a border between colors, such as yellow and cyan, whose phases of signal variations by color components are the same phase for every line, the VLPF 28 cannot reduce aliasing, and therefore weighting coefficient k2 is set close to 1 so that a greater amount of a signal of the center is used in order to avoid a decrease in vertical resolution. The above is a description of the image processing device of the second embodiment.

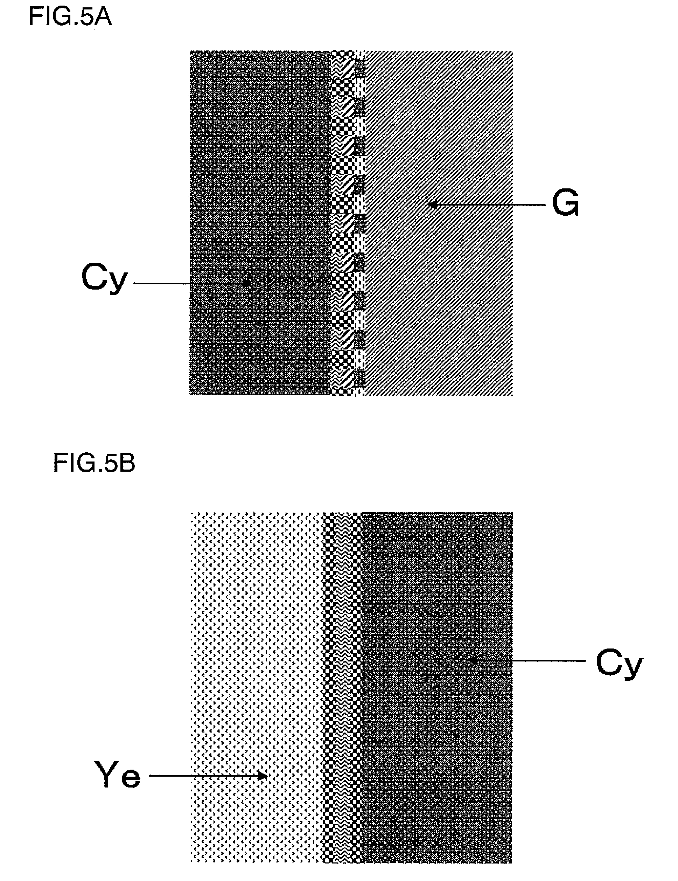

Figures 5A and 5B show examples of aliasing that occurs on a color border. How aliasing occurs on a color border depends on hues on the left and right of the color border. On a border between colors, such as green and magenta, and red and blue, whose phases of signal variations by color components are opposite to each other for every line, patchy aliasing occurs on the color border as shown in Figure 5A. This is because phases of signal variations by color components differ in these hues between a signal of the central line and signals of the upper and lower lines, so that highs and lows of the signal level of aliasing occurring on the color border alternate line by line.

On a border between colors, such as yellow and cyan, whose phases of signal variations by color components are the same phase for every line, aliasing occurs in vertical stripes as shown in Figure 5B. Since phases of signal variations by color components are the same in these hues between a signal of the central line and signals of the upper and lower lines, highs and lows of the signal level of aliasing occurring on the color border is the same between a signal of the central line and signals of the upper and lower lines, so that aliasing occurs in vertical lines. Aliasing occurs more obviously on a color border between colors, such as green and magenta, red and blue, and yellow and cyan, whose phases of signal variations by color components are opposite to each other.

In the image processing device of the second embodiment, aliasing can be reduced by calculating a weighted sum of a signal of a central line and an output signal of the VLPF 28 with weighting coefficient k2 depending on hue. That is, a high-resolution image can be obtained for an achromatic color area and even for a chromatic color area if the area has little saturation and change in hue; and a high-quality image with little aliasing can be obtained for a chromatic color area with some saturation and change in hue by using a signal on which vertical LPF has been performed.

(Third embodiment)

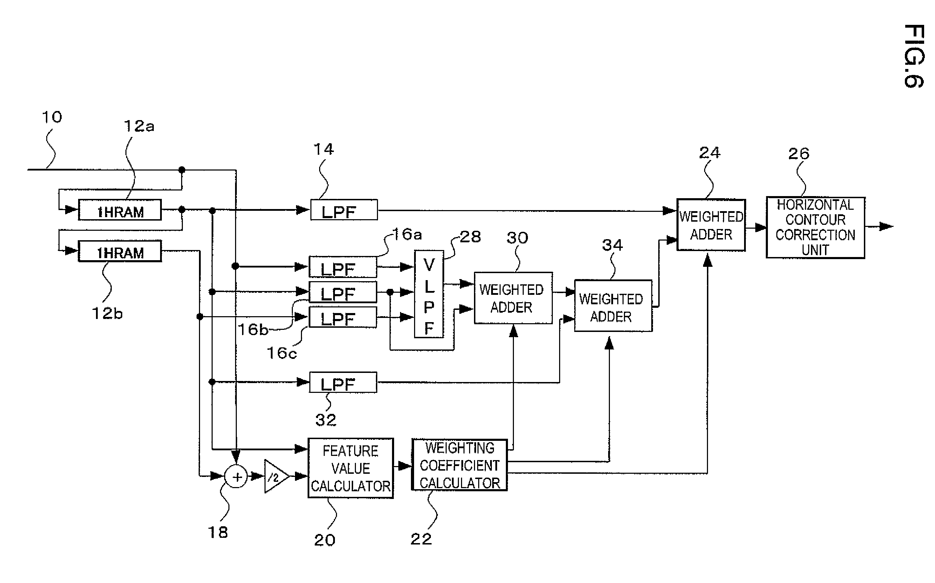

Figure 6 is a block diagram showing a configuration of an image processing device of a third embodiment of the invention. The configuration of the image processing device of the third embodiment is basically the same as that of the image processing device of the second embodiment, but the image processing device of the third embodiment further comprises an LPF 32 and a weighted adder 34.

The LPF 32 has a tap configuration such as $(1 + 3Z^{-1} + 3Z^{-2} + Z^{-3})/8$. The LPF 32 has a further lower frequency response characteristic than the LPF 14 and the LPFs 16a to 16c, and has a property of being able to limit aliasing on a color border better than the LPF 14 and the LPFs 16a to 16c.

In the third embodiment, the weighting coefficient calculator 22 calculates a weighting coefficient k3 to be used by the weighted adder 34, in addition to weighting coefficients k and k2.

As described above, the VLPF 28 cannot reduce aliasing that occurs in vertical stripes on a border between hues such as yellow and cyan. In this case, weighting coefficient k3 is set close to 0 so that a greater amount of an output signal of the LPF 32 is used. In cases other than this, weighting coefficient k3 is set close to 1 so that a greater amount of an output signal of the weighted adder 30 is used in order to maintain horizontal resolution. That is, the LPF 32 is a filter for correcting aliasing in a border area and is used for a color border; while it is controlled not to substantially operate by setting weighting coefficient k3 close to 1 in an area other than a color border area.

The weighted adder 34 calculates a weighted sum of an output signal of the LPF 32 and an output signal of the weighted adder 30 by the following equation (3) in which weighting coefficient k3 is used.

Weighted sum signal = (1 - k3)*Output signal of LPF 32 + k3*Output signal of weighted

adder 30   (3)

As stated above, a high-resolution image can be obtained for an achromatic color area and even for a chromatic color area if the area has little saturation and change in hue; and a high-quality image with little aliasing can be obtained for a chromatic color area with some saturation and change in hue by using a signal on which vertical LPF has been performed depending on hue or by using a signal on which border-area correction LPF has been performed.

While there have been described what are at present considered to be preferred embodiments of the invention, it will be understood that various modifications and variations may be made thereto, and it is intended that appended claims cover all such modifications and variations as fall within the true spirit and scope of the invention.

Industrial applicability

The invention has a great advantage of being able to reduce the scale of the circuit and to provide a high-resolution image even for a chromatic color area, and is useful as a complementary-color single-chip camera or the like.

**Claims**

1.   An image processing device comprising:

   a plurality of horizontal low-pass filters for performing horizontal low-pass filtering on an inputted image signal, the plurality of horizontal low-pass filters having different frequency response characteristics;
   a weighted adder for calculating a weighted sum of output signals from the plurality of horizontal low-pass filters; and
   a horizontal contour correction unit for performing horizontal contour correction based on a weighted sum signal calculated by the weighted adder.

2.   The image processing device according to claim 1, having:

   a feature value calculator for calculating hue from pixels surrounding a target pixel; and
   a weighting coefficient calculator for determining a weighting coefficient based on hue calculated by the feature value calculator,

   wherein the weighted adder calculates a weighted sum of the output signals using a weighting coefficient calculated by the weighting coefficient calculator.

3.   The image processing device according to claim 1, having:

   a feature value calculator for calculating saturation and hue from pixels surrounding a target pixel; and
   a weighting coefficient calculator for determining a weighting coefficient based on saturation, change in saturation, hue, and change in hue calculated by the feature value calculator,

   wherein the weighted adder calculates a weighted sum of the output signals using a weighting coefficient calculated by the weighting coefficient calculator.

4.   The image processing device according to claim 2 or 3, having:

   a plurality of horizontal low-pass filters to which an image signal and a delayed image signal are inputted, the plurality of horizontal low-pass filters having a same property;
   a vertical low-pass filter for performing vertical low-pass filtering on output signals from horizontal low-pass filters having a same frequency response characteristic; and
   a second weighted adder for calculating a weighted sum of an output signal of the vertical low-pass filter and an output signal of the horizontal low-pass filter,

wherein the weighting coefficient calculator determines a second weighting coefficient to be used by the second weighted adder, based on hue calculated by the feature value calculator.

5. The image processing device according to claim 4,
wherein the plurality of horizontal low-pass filters are separately placed on a plurality of lines;
wherein an image signal and a delayed image signal are inputted one by one to one of the plurality of lines according to a delay time thereof; and
wherein the second weighted adder calculates a weighted sum of an output signal of a central line of the plurality of lines and an output signal of the vertical low-pass filter.

6. The image processing device according to claim 2 or 3, having:

a border-area correction low-pass filter for correcting aliasing that occurs in a border area between colors,

wherein when an image signal of a border area has been detected based on hue determined by the feature value calculator, the weighted adder calculates the weighted sum including an output signal from the border-area correction low-pass filter.

**Amended claims under Art. 19.1 PCT**

1. An image processing device comprising:

a plurality of horizontal low-pass filters for performing horizontal low-pass filtering on an inputted image signal, the plurality of horizontal low-pass filters having different frequency response characteristics;
a weighted adder for calculating a weighted sum of output signals from the plurality of horizontal low-pass filters; and
a horizontal contour correction unit for performing horizontal contour correction based on a weighted sum signal calculated by the weighted adder.

2. The image processing device according to claim 1, having:

a feature value calculator for calculating hue from pixels surrounding a target pixel; and
a weighting coefficient calculator for determining a weighting coefficient based on hue calculated by the feature value calculator,

wherein the weighted adder calculates a weighted sum of the output signals using a weighting coefficient calculated by the weighting coefficient calculator.

3. The image processing device according to claim 1, having:

a feature value calculator for calculating saturation and hue from pixels surrounding a target pixel; and
a weighting coefficient calculator for determining a weighting coefficient based on saturation, change in saturation, hue, and change in hue calculated by the feature value calculator,

wherein the weighted adder calculates a weighted sum of the output signals using a weighting coefficient calculated by the weighting coefficient calculator.

4. The image processing device according to claim 2 or 3, having:

a plurality of second horizontal low-pass filters to which an image signal and a delayed image signal are inputted, the plurality of second horizontal low-pass filters having a same frequency response characteristic;
a vertical low-pass filter for performing vertical low-pass filtering on output signals from the second horizontal low-pass filters; and
a second weighted adder for calculating a weighted sum of an output signal of the vertical low-pass filter and an output signal of the second horizontal low-pass filter using a second weighting coefficient calculated by the weighting coefficient calculator,

wherein the weighted adder calculates a weighted sum of an output signal of the horizontal low-pass filter and an output signal of the second weighted adder using the weighting coefficient.

5. The image processing device according to claim 4,
wherein the plurality of second horizontal low-pass filters are separately placed on a plurality of lines;
wherein an image signal and a delayed image signal are inputted one by one to one of the plurality of lines according to a delay time thereof; and
wherein the second weighted adder calculates a weighted sum of an output signal of a central line of the plurality of lines and an output signal of the vertical low-pass filter.

6. The image processing device according to claim 2 or 3, having:

   a border-area correction low-pass filter for correcting aliasing that occurs in a border area between colors,

wherein when an image signal of a border area has been detected based on hue determined by the feature value calculator, the weighted adder calculates the weighted sum including an output signal from the border-area correction low-pass filter.

FIG.1

FIG.2

FIG.3

# FIG.4

FIG.5A

FIG.5B

FIG.6

EP 2 026 586 A1

FIG.7

EP 2 026 586 A1

| | | |
|---|---|---|
| **INTERNATIONAL SEARCH REPORT** | International application No. | |
| | PCT/JP2007/054288 | |

A. CLASSIFICATION OF SUBJECT MATTER
*H04N9/07*(2006.01)i

According to International Patent Classification (IPC) or to both national classification and IPC

B. FIELDS SEARCHED

Minimum documentation searched (classification system followed by classification symbols)
H04N9/07

Documentation searched other than minimum documentation to the extent that such documents are included in the fields searched
Jitsuyo Shinan Koho        1922-1996    Jitsuyo Shinan Toroku Koho    1996-2007
Kokai Jitsuyo Shinan Koho  1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 3540758 B2  (Sanyo Electric Co., Ltd.),<br>02 April, 2004 (02.04.04),<br>Par. Nos. [0025] to [0054]<br>& US 2002/47908 A1      & EP 1187491 A2 | 1<br>2-6 |
| A | JP 6-319152 A  (Mitsubishi Electric Corp.),<br>15 November, 1994 (15.11.94),<br>Par. Nos. [0010] to [0021]<br>(Family: none) | 1-6 |
| A | JP 61-45691 A  (Nippon Hoso Kyokai),<br>05 March, 1986 (05.03.86),<br>Page 4, lower right column, line 17 to page 5,<br>lower right column, line 1<br>& US 4680639 A          & EP 171764 A1 | 1-6 |

☐ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 June, 2007 (08.06.07) | Date of mailing of the international search report<br>19 June, 2007 (19.06.07) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006143668 A
- JP 3540758 B